Europäisches Patentamt

European Patent Office

Office européen des brevets

(11) Publication number: **0 097 695**
**B1**

(12) **EUROPEAN PATENT SPECIFICATION**

(45) Date of publication of patent specification: **19.04.89**

(21) Application number: **83900292.0**

(22) Date of filing: **30.12.82**

(86) International application number:
**PCT/HU82/00068**

(87) International publication number:
**WO 83/02327 07.07.83 Gazette 83/16**

(51) Int. Cl.⁴: **G 01 N 21/81,** G 02 B 5/26, G 02 B 5/28

(54) **PROCEDURE FOR THE PRODUCTION OF A HUMIDITY-SENSITIVE INTERFERENCE MIRROR, AND PROCEDURE AND EQUIPMENT FOR THE MEASUREMENT OF THE HUMIDITY USING SAID MIRROR.**

(30) Priority: **30.12.81 HU 399181**
**18.05.82 HU 156282**

(43) Date of publication of application:
**11.01.84 Bulletin 84/02**

(45) Publication of the grant of the patent:
**19.04.89 Bulletin 89/16**

(84) Designated Contracting States:
**AT BE CH DE FR GB LI LU NL SE**

(56) References cited:
**DE-C- 902 191**
**SU-A- 146 546**
**SU-A- 565 236**
**US-A- 2 700 323**
**US-A- 3 436 159**
**US-A- 4 040 749**

The file contains technical information submitted after the application was filed and not included in this specification

(73) Proprietor: **MTA KÖZPONTI FIZIKAI KUTATO INTEZETE**
**29-33, Konkoly Thege ut**
**H-1121 Budapest (HU)**

(72) Inventor: **KROO, Norbert**
**17, Apáczai Csere János utca**
**H-1052 Budapest (HU)**
Inventor: **LUTTER, András**
**10, Fülemile utca**
**H-1121 Budapest (HU)**
Inventor: **RUBIN, György**
**12, Fülemile utca**
**H-1121 Budapest (HU)**

(74) Representative: **Hansen, Bernd, Dr.rer.nat. et al**
**Hoffmann, Eitle & Partner Patentanwälte**
**Arabellastrasse 4**
**D-8000 München 81 (DE)**

(56) References cited:
**OPTICS AND SPECTROSCOPY, vol. 35, no. 2, August 1973, The Optical Society of America, NEW YORK (US) I.N. SHKLYAREVSKII et al.: "Effect of absorbed moisture on the position of the passband of narrow-band interference filters", page 206-208**

(56) References cited:

REVUE D'OPTIQUE, vol. 43, no. 12, December 1964, PARIS (FR) Y. LE DUFF et al.: "Etude du déplacement de la bande passante d'un filtre interférentiel par action d'un gaz", pages 613-617

THIN SOLID FILMS, vol. 85, no. 2, November 1981, LAUSANNE (CH) J.M. SAUREL: "Propriétés générales des filtres interférentiels type multi-demi-inde: classification et recherche des meilleurs types d'empilements", pages 97-110

SOVIET JOURNAL OF OPTICAL TECHNOLOGY, vol. 46, no. 1, January 1979, The Optical Society of America, NEW YORK (US) M.N. CHEREPANOVA et al.: "Optical properties of narrow-band interference filters as function of incidence angle and polarization of the incident light", pages 57-58 & Opt. Mekh. Promst, 46,54-55 (January 1979)(Cat.D)

SOVIET JOURNAL OF OPTICAL TECHNOLOGY, vol. 46, no. 10, October 1979, The Optical Society of America, NEW YORK (US) B.V. PANASENKO: "Stabilizing the parameters of silicon dioxide films obtained by thermal evaporation in vacuum", pages 607-609 & Opt. Mekh. Promst. 46, 36-38 (October 1979)(Cat.D)
SOVIET INVENTIONS ILLUSTRATED, Derwent Publications

SOVIET INVENTIONS ILLUSTRATED, vol. A no. 22, July 11, 1978, Derwent Publications, LONDON (US)

N.A. Borisevich et al. "Infrakrasny filtry", 1971, Minsk, pp. 119-122, 112, 116-123

Optiko-mekhanicheskaja promyshlennost, no. 9, 1978, Leningrad; L.L. Matskevich et al. "Shirokopolosnye dielektricheskie zerkala iz okislov titana i kremnija", pp. 46-47

Optiko-mekhanicheskaja promyshlennost, no. 11, 1979, Leningrad; M.N. Cherepanova et al., "Mnogosloinye vakuumnye pokrytia na osnove sloev dvuokisi titana i dvuokisi kremnia", pp. 59-61

G. Kinel "Tekhnologia pokrytia i materialy v optike" Doklad firmy "Leybold Heraeus", DE, na Mezhdunarodnoi vystavke "Optica-79", Moscow

## Description

The invention relates to an apparatus and a method for the measurement of the relative humidity and/or vapour concentration in air or in other gases.

As is well known, the determination of humidity of air and other gases and the possible control thereof represents a task whose importance is increasing parallel with scientific development, in particular, in the fields of biology, different areas of industrial technology, storage and meteorology.

The humidity of air influences the metabolism of living organisms. In rooms designed to hold a large number of people for longer periods, such as working-rooms, auditoria, and theatres the air is regulated by means of air-conditioners, the optimal climate is similarly achieved in greenhouses, zoological houses and phytotrones. The proliferation of fungus cultures used in the production of antibiotica is also dependent on air humidity. Optimal climatic conditions are required in food conservation and refrigeration, in the fermenting rooms of cheese-makers and breweries and where perishable goods are stored. In these fields the control and regulation of the relative air humidity is imperative. The control and regulation of air humidity in electronic precision engineering and precision mechanics is also of utmost importance. In rooms, where electronic instruments are operated, e.g. in central telephone and telegraph exchanges or computer rooms, the relative humidity has to be kept as low as possible.

Thu relative humidity of air represents an important parameter for several industrial technologies, so e.g. in the film-, paper-, textile-, milling-, tobacco- and timber industries. Due to the hygroscopic properties of the materials involved, their mechanical properties are influenced by the prevailing relative humidity.

In order to avoid condensation in gases and natural gases streaming in long-distance pipelines, control of the dew point is imperative.

The control of the absolute humidity of gases is most important in protective gas technologies, nuclear power plants, space technology and in the olefinic and petroleum chemistry. The measurement of the relative humidity of air in meteorology is well known.

It is also well known that the sensitive detection of different vapours like alcohol, ethylether, toluence, paraffines, etc. in air or in other carrier gases is of great importance in many fields, for instance in workshops with a toxic atmosphere, in the technological control of distillation or in different fields of measuring techniques e.g. in gas chromatography etc.

There are many different methods to separate the mentioned substances from other materials on the basis of their varying physical or chemical properties. After their separation, again a large number of different methods can be used for their determination. Due to their multiplicity, these methods cannot be listed here. The present description of the prior art devices is, therefore, restricted to devices based on measuring heat conductivity, which have been most commonly used in gas chromatography so far.

These devices detect various vapours in streaming gases on the basis of the difference between the heat conductivities of the gases and the vapours in question, with a maximum sensitivity of 1 ppm. Their advantage is their simple construction and their ease of handling. On the other hand, significant disadvantages lie in their considerable sensitivity to the flow rate of the carrier gas as well as in their high energy consumption which prohibits a portable construction.

Even from this brief outline it is evident that the determination of the humidity in air and other gases represents an important task in the field of industrial technologies, science, research etc.

In order to be able to span a wide measurement range, many types of instruments based on various measuring techniques and principles have been developed. The instruments so far available for such measurements indicate absolute or relative humidity, mixture ratio, ppm units, as well as the dew point.

Due to the diversity of the fields of application and the six to seven orders of magnitude of measurement range required, several measuring methods and signal converter types have been developed for the determination of the humidity in air and other gases.

The most important instruments for the determination of the humidity in air and other gases are dew point hygrometers, psychrometers and different sorption hygrometers, such as sorption oxide-plate hygrometers.

In thermodynamics, the dew point indicates the vapour content of a given vapour space; it may be determined by direct or indirect methods.

The psychometric measurement of the humidity in air and other gases is based on the fact that the evaporation rate of water depends on the humidity of the surrounding atmosphere. Evaporation involves a transport of heat and matter between the water surface and the environment. If the atmosphere is unsaturated by vapour, matter is transported from the liquid phase into the gaseous phase. Since the heat needed for evaporation is extracted from the environment, its temperature decreases. Although the rate of evaporation cannot be given in form of a defined thermodynamic function, the cooling rate can well be used for characterizing the humidity of the gas.

Sorption resonance hygrometers operate on the principle that the variation of the mass of the sorption surface is proportional to the prevailing relative humidity of the gas. The sensing element of the instrument consists of two identical quartz crystals, the surface of one of these is coated with a hyroscopic layer.

As a consequence of condensation, the mass of the quartz crystal changes effecting a change in the eigenfrequency of the quartz crystal. By using an appropriate measuring circuit, the degree of the shift in frequency distinctive of the relative humidity of the gas can be determined. The sorption coulometric hygrometer operates on the principle that the electric charge passing through the electrodes during electrolysis is proportional to the quantity of matter involved in the electroreaction (Faraday's law).

Measurement with sorption deformation hygrometers is based on the dimensional change of the hygroscopic matters which depends on the absorbed moisture content. Their main advantage is their low cost. The mechanical signal of the hair-hygrometers can be converted into an electric signal by means of a resistor distance-transmitter. The hygrometer with gold percussion film used in meteorological radioprobes operates with a telemetric signal transmitter.

The sensing element of the sorption oxide plate hygrometers is a capacitor, the capacity of which varies in proportion to the humidity of air. The vapour diffuses into the dielectric medium and condenses in the porous oxide in dependence of the prevailing humidity, thereby changing the capacity of the capacitor. Thus it is evident that with this known procedure the humidity is measured electrically by determining the rate of change in the capacity of the capacitor. However, the temperature range of this solution is limited and the settling time is relatively long. In addition, wired cable connection is required.

The theory of optical thin film systems, i.e. interference mirrors (edge filters) and interference filters (band-pass filters) is discussed in the book "Optical Properties of Thin Solid Films" by Heavens, O. S., edited by Butterworths Sci. Pub. in London, 1955, however, without instructions on the production of such interference systems.

From Opt. Spectrosc. 35 (1973)2, pages 206—208, it is known to investigate the effect of absorbed moisture on the displacement of the passband of narrowband interference filters. The moisture is absorbed by fluoride layers and the passband is shifted forward to the long-wavelength end of the spectrum. It is shown that absorption of moisture by a central layer (a change in optical thickness) and by the layers adjacent to it (a change in the phase shift) make approximately the same contribution to this shift.

A similar system is known from Revue d'Optique, 43, (1964) 12, Paris, pp. 613—617.

In this paper by Le Duff et al, the displacement of the pass band of an interference filter by the action of a gas is discussed.

From this disclosure it may be taken that air moisture (humidity) is one possible explanation for the shift of the pass band of an interference filter towards the red when exposed to air. The authors propose that it is the polar character of the water molecules that is reasonable for this phenomenon, but do not exclude other causes. Since this disclosure is a purely theoretical paper, no proposal or suggestions for exploiting the effect are to be found in the document.

An object of the present invention is to develop a method and an apparatus which achieve at least one of the following:
—low energy consumption,
—wide temperature range of measurement,
—measurement of the relative humidity and/or vapour concentration in air or in other gases and their variation by optical means,
—high resistance to corrosion,
—high-speed operation,
—high measurement accuracy,
—high long-term stability,
—sufficiency of a single interference mirror or interference filter located in the space to be measured,
—possible remote location of light source and light detector,
—increasable sensitivity in the different measurement ranges,
—applicability as a detector in gas chromatography,
—independence of measurement data from the flow rate when used as a detector in gas chromatography, and
—the possibility to increase the speed of operation, when used as detector in gas chromatography.

According to one aspect of the invention, there is provided an apparatus for the measurement of vapour concentration in gases which comprises a power supply unit and a monochromatic light source connected in series, a vapour concentration sensitive interference thin film system located in the path of the light beam of the monochromatic light source of wavelength $\lambda$, a light detector for the detection of the light beam having penetrated the thin film system as well as an amplifier and a display unit connected in series to the output of the light detector, said thin film system consisting of a transparent substrate and a layer joined to said substrate, which layer has at least one dielectric layer with porous structure suitable for absorbing the vapour to be measured and comprises dielectric thin films being preferably of the optical thickness $\lambda/4$ and having alternately low and high refraction indices $n_1$ and $n_2$, respectively, said thin film system having a characteristic transmission-wavelength function with a slope shift proportional to the change of the vapour concentration at a wavelength range including the wavelength of said light source.

According to another aspect of the invention, there is provided a method for the measurement of vapour concentration in gases, which comprises:

exposing a vapour sensitive interference thin film system to the vapour the concentration of which is to be measured said thin film system having a characteristic transmission-wavelength function with a slope shift proportional to the change of the vapour concentration in a certain range of wavelength;

producing a monochromatic light the wavelength of which being within said range of wavelength;

directing a beam of said monochromatic light to said thin film system;

detecting the intensity of the light having penetrated said thin film system; and

displaying the vapour concentration.

The invention is based on the realization that the refraction index of thin dielectric layers depends on the relative humidity or other vapour content absorbed in the dielectric layer, which is in equilibrium with the environment. The reason for this is that any volatile substance is apt to condense within small capillary holes whose geometric dimensions are sufficiently large as compared to these of the vapour molecules. If holes of said dimensions are present in the dielectric structure of an optical thin film system, i.e. interference mirror or interference filter the transition function of this optical thin film system varies depending on the amount of the volatile substance condensed in the holes, and the change can be measured e.g. via light detection in transmission or reflexion.

The measurement of small changes in the refraction index can be facilitated by increasing the wavelength of measurement or the slope of the transition function of the optical thin film system containing a porous layer or layers. In the further description ($\lambda$ (lambda) means wavelength of measuring light.

For use in preferred embodiments of the invention there may be provided a humidity- and/or vapour-sensitive interference mirror or interference filter, i.e, edge filter or band-pass filter, respectively, in which thin layers consisting of two or more components are brought to the surface of a transparent substance in an optical thickness of the quarterlambda or of a multiple of quarterlambda. On the surface of a transparent substrate at first an interferance mirror is produced of an odd number of dielectric layers with alternately low and high refraction indices by vacuum evaporation from suitable sources, e.g. from a molybdenum boat, in an optical thickness of quarterlambda. The transparent substrate may be a glass or quartz plate. The dielectric layers, each having the optical thickness of quarterlambda, are preferably produced by alternately evaporating substances of low and high refraction indices, preferably silicon dioxide and titanium dioxide, respectively. The evaporation of the consecutive layers alternating in said manner is preferably continued until the required reflexion is reached.

In the process of producing a humidity- and/or vapour-sensitive interference filter (band-pass filter), an intermediate layer may be formed of a number of layers of the optical thickness of halflambda by evaporation of the substance with high refraction index onto the surface of said mirror produced on the transparent substance as described above.

For the production of an interference filter a second interference mirror may then be produced upon the intermediate layer by the same method as with said first mirror produced at first on the transparent substrate.

The wanted porous structure may be achieved by heating the transparent substrate up to approximately 300 to 350°C at the beginning of the evaporation which temperature is preferably increased gradually up to approximately 400 to 450°C by the end of the evaporation. The vacuum evaporation is performed at a high oxygen content of the rest gases at a pressure of 5 to $10 \times 10^{-4}$ mbar and at a speed between 0.1 and 0.5 nm.

According to preferred embodiments to the invention, light of a narrow bandwidth light source may be passed at least once through a humidity- and/or vapour-sensitive optical thin film system, namely through a humidity- and/or vapour-sensitive interference mirror or interference filter (edge filter or band-pass filter), the light beam having penetrated said mirror or filter being detected by a light detector, the output signal from the detector being amplified and then displaced (for instance by a Deprez instrument calibrated for relative humidity or for other vapour content). If said humidity- and/or vapour-sensitive optical film system is an interference filter (i.e. band-pass filter) then its wavelength shift may be measured by turning said filter until the maximum transmission is reached.

It is expedient to pass the light beam of the narrow bandwidth light source through the humidity- and/or vapour-sensitive interference mirror more than once before detection, for instance by employing further reflective layer (e.g. a mirror) behind said interference mirror to return the light beam for a repeated penetration of said interference mirror, after which the intensity of the light beam is detected.

It is also expedient to employ as narrow bandwidth light source a light emitting diode, in a manner such that the bandwidth of its light is further reduced e.g. by a narrow bandwidth interference filter. The temperature of the diode may be measured by a temperature sensor or its forward voltage by a differential amplifier, and the amplified signal of the temperature sensor or the output signal of the differential amplifier may be used to compensate the amplified signal from said light detector, and the compensated signal may be displayed.

It is further expedient to control the intensity of the narrow bandwidth light source, into two parts, one part, the measuring light beam is passed through said interference system while the other part is deflected. Preferably, the deflected beam is detected, the detected signal is amplified and then compared with a reference signal. Preferably, the difference signal is further amplified by a power amplifier, whose output signal is used to stabilize the light intensity of the narrow bandwidth light source.

It is also expedient to lead the light source through a preferably disk-shaped light chopper having an even number of openings, with a humidity- and/or vapour-sensitive interference mirror in every second opening. The light falling to the light detector behind the chopper will have an intensity proportional to that of the narrow bandwidth light source when passing through a vacant opening (hereinafter: reference light) and will be proportional to the relative humidity and/or vapour concentration in the gas space when penetrating the interference mirror in every second opening (hereinafter: measuring light). In the intervening time when the covering area of the light chopper blocks the path of the light, the light detector detects the background light. The output signals of said detector are amplified and then converted by an analog-to-digital converter. The digital data obtained in this manner are proportional periodically to the measuring light intensity, i.e. to the relative humidity and/or vapour concentration in the gas space, to the reference light, i.e. to the intensity of the narrow bandwidth light source and to the intensity of the background light. Now, the differences between the digital data from the measuring light and the background light as well as between the digital data from the reference light and the background light are produced, after which the quotient of these differences is formed, and this quotient is displayed with the help of an instrument calibrated for relative humidity and/or vapour concentration.

In the case of an analog setting of maximum transmission it is expedient to rectify the amplified signal from the light detector by using a lock-in amplifier and then to add the output and reference signals of the lock-in amplifier. The signal obtained in this way is then applied to an analog volate-to-angle converted (e.g. a Deprez instrument) and the angular position of the humidity- and/or vapour sensitive interference filter (band-pass filter) is modified with said converter (e.g. through the position of the pointer of the Deprez instrument).

In case of a digital setting of maximum transmission it is also expedient to digitalize the amplified signal of the light detector and to employ a digital pulse-to-angle converter (e.g. a stepping motor) for turning said interference filter (band-pass filter) an angle of $\Delta\phi$. The first turn may be in either direction, after which the light transmitted by said interference filter is detected, the detected signal is amplified, digitalized and stored with the help of an analog-to-digital converter. Then, after having turned said filter to a new angular position by the angle $\Delta\phi$, the detected signal is digitalized and compared to that obtained in the preceding position. If the newly detected intensity is higher, the next turn by the angle $\Delta\phi$ will be made in the same direction as the previous one, or vice versa: if it is lower, the next turn will occur in the opposite direction. This stepwise rotation is continued until the maximum transmission is reached and the corresponding angular position is displayed.

In the case of a digital setting of maximum transmission it is also expedient to lead two light beams of slightly different wavelengths through said interference filter (band-pass filter) and to detect the two beams separately. The difference of the two detected signals varies when the filter is turned and disappears if the wavelength of the maximum transmission is the arithmetic mean of the wavelength of the two light beams. The difference signal obtained by comparing the two detected signals is used for controlling a servosystem which then adjusts the angular position corresponding to the maximum transmission, which will correspond to the zero value of the difference signal.

The invention will be described more fully with reference to the accompanying drawings which illustrate schematically some different possible embodiments of the apparatus according to the invention as follows:

Fig. 1: A possible embodiment of apparatus according to the invention

Fig. 2: A possible embodiment of the humidity- and/or vapour-sensitive interference filter

Fig. 3: Emission intensities of the narrow bandwidth light sources as a function of wavelength

Fig. 4: Transmission of a low-pass humidity- and/or vapour-sensitive interference mirror as a function of wavelength

Fig. 5: Transmission of a high-pass humidity- and/or vapour-sensitive interference mirror as a function of wavelength

Fig. 6: Transition function of apparatus according to one embodiment of the invention with the relative humidity as parameter

Fig. 7: A possible embodiment of the humidity- and/or vapour-sensitive interference mirror twice penetrated by light beam

Fig. 8: A further possible embodiment of the humidity- and/or vapour-sensitive interference mirror twice penetrated by light beam

Fig. 9: Two further possible embodiments of apparatus according to the invention

Fig. 10: A possible embodiment of the stable current generator employed in preferred embodiments of the invention

Fig. 11: A possible embodiment of the compensating electronic unit

Fig. 12: A further possible embodiment of apparatus according to the invention

Fig. 13: A possible embodiment of the light intensity control unit

Fig. 14: A further possible embodiment of apparatus according to the invention

Fig. 15: Some possible embodiments of the light chopper

Fig. 16: A possible embodiment of the evaluating unit

Fig. 17: A further possible embodiment of the apparatus according to the invention

Fig. 18: A possible embodiment of the maximum-setting unit

Fig. 19: Transmission of a humidity- and/or vapour-sensitive interference filter (band-pass filter) as a function of wavelength (in arbitrary units)

Fig. 20: A further possible embodiment of apparatus according to the invention

Fig. 21: A possible embodiment of the unit for digital maximum-setting

Fig. 22: Diagram illustrating the operation of the unit for analog maximum-setting Fig. 23: Flow chart of the maximum-setting unit with stepping motor

Fig. 24: Transmission of an interference mirror versus wavelength

Fig. 25: Output voltage as a function of relative humidity or vapour concentration

Fig. 26: Transmission of a humidity- and/or vapour-sensitive interference mirror versus wavelength, showing a high sensitivity for low relative humidity or vapour concentration values

Fig. 27: Output voltage versus relative humidity or vapour concentration

Fig. 28: Transmission of a humidity- and/or vapour-sensitive interference mirror versus wavelength, showing a high sensitivity for medium relative humidity or vapour concentration

Fig. 29: Output voltage as a function of relative humidity or vapour concentration

Fig. 30: Transmission curve of a humidity- and/or vapour-sensitive interference mirror as a function of wavelength, showing a high sensitivity for high relative humidity or vapour concentration values.

In all figures, identical reference numbers are used for identical parts. If a particular part appears more than once, or if further details are distinguished within a particular part, the reference number is supplemented by a letter and the reference letter by a number. Individual leads are denoted by small letters and one-way connections by arrows.

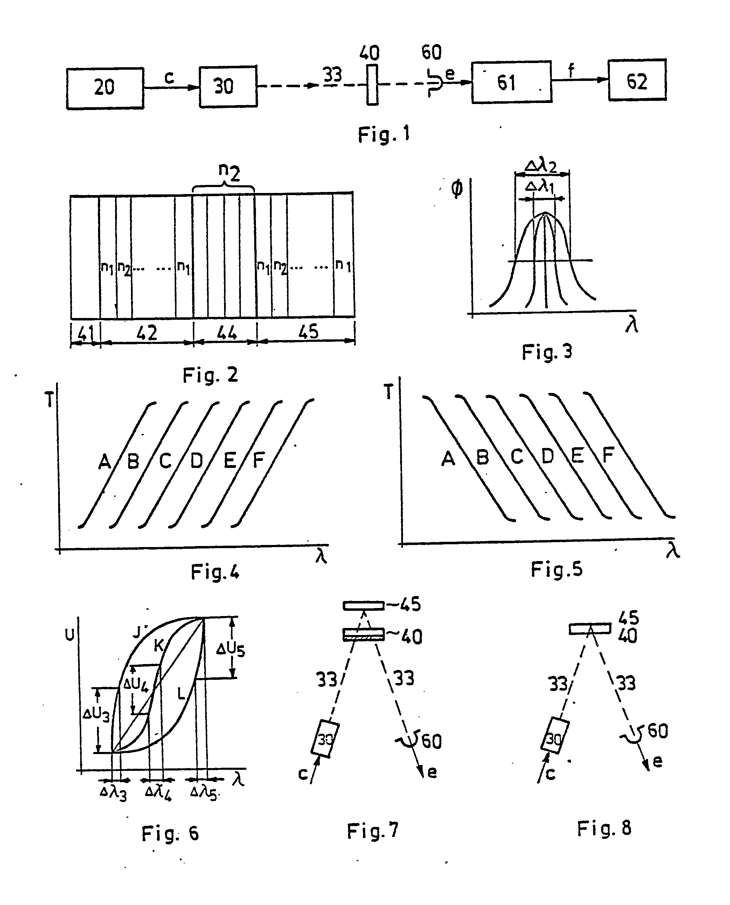

Fig. 1 shows a possible embodiment of apparatus according to the invention, which is suitable for measuring the relative humidity and/or vapour concentration in air or in other gases as well as their variation. The equipment has a power supply unit 20 and a narrow bandwidth light source 30 connected in series. Further it has a humidity and/or vapour-sensitive interference mirror 40 located in the path of the light beam 33 of the light source 30, a light detector 60 for the detection of the light beam 33 penetrating the interference filter 40, as well as an amplifier 61 and a display unit 62 connected in series with the light detector 60. The light of the narrow bandwidth light source 30, which may be either a gas laser, semiconductor laser, solid state laser or a light emitting diode, fed by the power supply unit 20, is led through the humidity and/or vapour-sensitive interference mirror 40. The light beam 33 having penetrated said interference mirror 40 is detected by the light detector 60 which may be a PIN photodiode, an avalanche diode, a light-sensitive resistance, a photomultiplier or some other device.

Fig. 2 shows a possible embodiment of the humidity- and/or vapour-sensitive interference filter which has a porous layer structure. The humidity- and/or vapour-sensitive interference filter 46 has a transparent substrate 41, a first mirror 42 formed of optically λ/4 thick layers with alternately low and high refraction indices n1 and n2, respectively, applied onto the surface of the transparent substrate 41. To the first mirror 42 an intermediate layer 43 is connected which consists of optically λ/2 thick layers with high refraction index n2. To the intermediate layer, again a second mirror 44 is connected which consists of optically λ/4 thick layers with alternately low, n1, and high, n2, refraction indices.

Fig. 3 shows the emission intensities of a light emitting diode and of a laser light source as plotted against their wavelengths. The light emitting diode cannot directly be employed as a narrow bandwidth light source because it has a relatively large bandwidth of about 40 to 50 nm (curve G). This bandwidth, however, can be reduced to a range between 10 and 15 nm suitable for a narrow bandwidth light source (curve H), by leading the light of the light emitting diode through a narrow bandwidth selective interference filter. The intensity curve of the laser light source consists of a single peak which, when plotted against the given wavelength scale, is represented by a vertical line as shown by the curve I in Fig. 3.

Figures 4 and 5 show a few transmission curves of two humidity- and/or vapour-sensitive interference mirrors for the following humidity or vapour concentration values, left to right: 0%, 20%, 40%, 60%, 80% and 100%, represented by curves A, B, C, D, E and F, respectively.

The humidity- and/or vapour-sensitive interference mirror or edge filter 40 is a high-pass filter if its transmission increases with increasing wavelength (Fig. 4) and it is a low-pass filter if its transmission decreases with increasing wavelength (Fig. 5). In Figures 4 and 5 the abscissa is the wavelength λ and the ordinate is the transmission T. For any value of the relative concentration, the transmission of the mirror in question can be read off as the ordinate of the point belonging to the wavelength of the narrow bandwidth light sources as abscissa. As indicated in the figures, the transmission curves are shifted parallelly to their original position to an extent proportional to the relative humidity or vapour concentration in the gas space. Any shift in the transmission curves corresponds to a variation in the intensity of the transmitted light which is detected by the light detector 60 and displayed, after amplification, by the display unit 62 calibrated for relative humidity and/or vapour concentration.

In Fig. 6, possible output signals of the equipment measuring relative humidity or vapour concentration is plotted as the ordinate against the wavelength as abscissa. The figure shows three curves J, K and L with varying slope. The first curve J has the highest slope at low relative humidity or vapour concentration, the second curve K at a medium relative humidity or vapour concentration and the third curve L at high relative humidity or vapour concentration. This means that the sensitivity of the equipment is greatly variable depending on which of the three curves is chosen for realization. $\Delta U_3$, $\Delta U_4$ and $\Delta U_5$ denote the variation of the output signal that correspond to given variation of the wavelength

($\Delta\lambda_3$, $\Delta\lambda_4$ and $\Delta\lambda_5$, respectively).

The shape of said curves depends on the following four factors:

a) the shape of the optical transisition function of the humidity- and/or vapour-sensitive interference mirror or interference filter in the wavelength range of measurement;

b) the relation between the wavelength range of measurement and the wavelength of the narrow bandwidth light source;

c) the measure of wavelength shift of the humidity- and/or vapour-sensitive interference mirror or interference filter caused by a 0—100% variation in the relative humidity or vapour concentration;

d) the bandwidth of the narrow bandwidth light source.

Figures 7 and 8 show two arrangements according to which the light beam 33 of the narrow bandwidth light source 30 is led twice through the humidity- and/or vapour-sensitive interference mirror 40. On the side of the humidity- and/or vapour-sensitive interference mirror 40, located in the path of the light beam 33, opposite the narrow bandwidth light source 30—either immediately on the surface of the transparent substrate 41 of the humidity- and/or vapour-sensitive interference mirror 40, or farther from it—there is a reflective surface 45, e.g. a mirror. Both illustrated arrangements allow a doubling of the value of sensitivity of the equipment according to the invention. The embodiment shown in Fig. 7 contains a reflective surface 45, e.g. a mirror, parallel to and at a certain distance behind the humidity- and/or vapour-sensitive interference mirror 40. The reflected light beam 33, having twice penetrated the humidity- and/or vapour-sensitive interference mirror 40, is detected by the light detector 60. The embodiment shown in Fig. 8 differs from that shown by Fig. 7 in that the reflective surface 45, e.g. mirror, is on the surface of the transparent substrate 41 of the humidity- and/or vapour-sensitive interference mirror 40, facing the narrow bandwidth light source 30 from the opposite side.

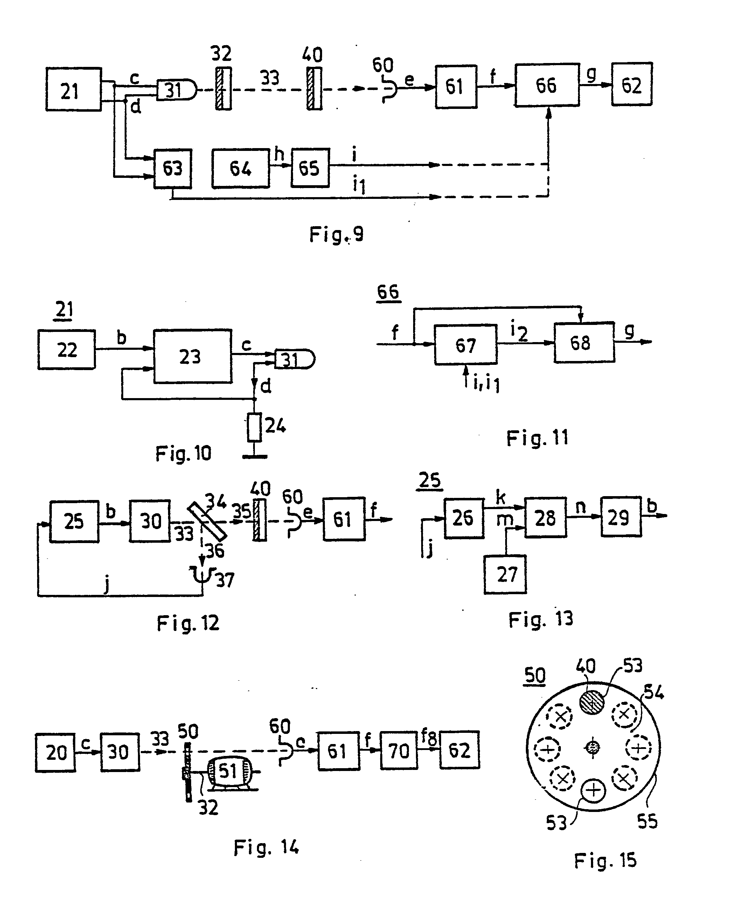

Fig. 9 shows two further possible embodiments of the equipment according to the invention. In one of these embodiments, the power supply unit 20 is a stabilized current generator 21, and the narrow bandwidth light source 30 consists of a light emitting diode 31 and of a narrow bandwidth selective interference filter 32. On the surface of the light emitting diode 31 and in good thermal contact with it there is a temperature sensor 64. Between the amplifier 61 and the display unit 62 there is a compensating unit 66. The temperature sensor 64 is connected to the input of the compensating unit 66 through an amplifier 65. Since the intensity of the light hitting the light detector 60 is determined by the relative humidity and/or vapour concentration of the air or gas space to be measured, on the one hand, and by the intensity of the light emitting diode 31 on the other hand, the latter intensity must be known.

Since the light emitting diode 31 is supplied by a constant current generator 21, the emitted light intensity depends only on the temperature of the light emitting diode 31, This—negative—temperature dependence can be described as follows:

$$\frac{\Delta\phi}{\Delta T}\simeq-1\%/°C,$$

where $\Delta\phi$ is the variation of the intensity of the emitted light and $\Delta T$ denotes a change in the temperature of the diode.

Consequently, the influence of the temperature variation can be compensated by the compensating unit 66 if the temperature of the light emitting diode 31 is measured—which is done by using the temperature sensor 64.

A further embodiment of the equipment according to the invention, shown in Fig. 9, has a differential amplifier 63 between the two leads of the light emitting diode 31 and the input of the compensating unit 66. The operation of this embodiment is identical to that of the previous embodiment illustrated in Fig. 9 with the only difference that the temperature of the light emitting diode 31 is determined by measuring the forward voltage of the light emitting diode 31.

If the current $I_F$ of the light emitting diode 31 is kept at a contant value independent of the temperature variation, the forward voltage $U_F$ will decrease with increasing temperature T. The variation of the forward voltage $U_F$ depends on the construction and current of the light emitting diode 31 and ranges between −1.3 mV/°C and −2.3 mV/°C. The differential amplifier 63 measures the voltage drop between the leads of the light emitting diode 31 which is proportional to the temperature of the light emitting diode 31. The variation in the light intensity emitted by the light emitting diode 31 caused by temperature variation is compensated by the compensating unit 66 by using the output signal of the differential amplifier 63.

Fig. 10 shows a possible embodiment of the stable current generator 21, which has a reference voltage generator 22 and an operational amplifier 23 connected in series with each other, as well as a resistance 24 connected in series with the light emitting diode 31. The second, phase-inverting input of the operational amplifier 23 is connected to the common lead d of the light emitting diode 31 and of the resistance 24, and the other lead of the resistance 24 is grounded. The reference voltage generator supplies a voltage $U_o$ whereby the current of the light emitting diode 31 connected to the output c of the operational amplifier 23 is $I_o=U_o/R$, where R is the value of the resistance 24.

Fig. 11 shows a possible embodiment of the compensating unit 66, which has a multiplying unit 67 and an adding unit 68 connected in series with each other. The first input of the compensating unit 66 is formed by both an input of the multiplying unit 67 and an input of the adding unit 68, the second input of the compensating unit 66 is the second input of the multiplying unit 67 and the output g of the compensating unit 66 is the output of the adding unit 68. The amplified measuring signal is multiplied with the output signal from the amplifier 65 or from the differential amplifier 63, and the obtained signal is added to the amplified measuring signal. The output signal of the compensating unit 66 is displayed by the display unit 62.

Fig. 12 shows a further possible embodiment of the equipment according to the invention in which the power supply unit 20 of the light source 30 is a light intensity control unit 25. Between the narrow bandwidth light source 30 and the humidity- and/or vapour-sensitive interference mirror 40 there is a semipermeable mirror 34 in the path of the light beam 33. In the path of the measuring beam 35 passing through the semipermeable mirror 34 is the humidity- and/or vapour-sensitive interference mirror 40 and a first light detector 60, and in the path of the reference beam 36 reflected from the semipermeable mirror 34 is a second light detector 37. The first light detector 60 is connected to the input of the amplifier 61 and the second light detector 37 is connected to the input of the light intensity control unit 25. It is important that the first light detector 60 detecting the measuring beam 35 and the second light detector 37 detecting the reference beam 36 should have the same quantum efficiency and spectral sensitivity. It is also important that the quantum efficiency and spectral sensitivity have the same temperature dependence. Under such circumstances the light intensity control unit 25 keeps the output signal of the second light detector 37 at a constant value. Accordingly, the output signal of the light detector 60 of the measuring beam 35 will depend primarily on the relative humidity and/or vapour concentration in the gas space. The output signal of the light detector 60 of the measuring beam 35 is amplified by the amplifier 61 and then applied to the display unit 62 which then indicates the relative humidity and/or vapour concentration value.

Fig. 13 illustrates a possible embodiment of the light intensity control unit 25, which has a preamplifier 26, a differential amplifier 28 and a power amplifier 29 connected in series with each other. A reference voltage generator 27 is connected to a second input of the differential amplifier 28. The input of the light intensity control unit 25 is formed by the output j of the second light detector 37 connected to the input of the preamplifier 26. The output of the light intensity control unit 25 is the output b of the power amplifier 29. The output signal from the light detector 37 of the reference beam 36 is amplified by the preamplifier 26. The output signal from the preamplifier 26 is compared with the signal from the reference voltage generator 27 by the differential amplifier 28, which then supplies the power amplifier 29 with a signal proportional to the difference of the two signals compared. The output signal of the power amplifier 29 is fed into the narrow bandwidth light source 30. If the intensity of the narrow bandwidth light source 30 increases, the output signal of both the second light detector 37 and of the preamplifier 26 will increase as well. This increased output signal is compared with the output signal of the reference voltage source 27 by the differential amplifier 28, which now gives a weaker signal to the power amplifier 29. The power amplifier 29 will, accordingly, decrease the supply voltage of the narrow bandwidth light source 30, so the light intensity of the latter will reduce. A similar but opposite process takes place if the intensity of the light source 30 decreases. This means that the intensity of the narrow bandwidth light source 30 is stabilized.

Fig. 14 illustrates a further possible embodiment of the equipment according to the invention, which has a light chopper 50 equipped with one or more humidity- and/or vapour sensitive interference mirrors 40, arranged perpendicular to and in the path of the light beam 33, between the narrow bandwidth light source 30 and the light detector 60. The chopper 50 is fixed to the shaft 32 of a—preferably synchronous—motor 51. In addition, the embodiment shown in Fig. 14 also has an evaluation unit 70 between the output f of the amplifier 61 and the input of the display unit 62.

Fig. 15 shows a possible embodiment of the light chopper 50, which is preferably a metal disk. The light chopper 50 has an even number of—at least two—openings 53 along a circle. In every second opening there is a humidity- and/or vapour-sensitive interference mirror 40 and every opening between the interference mirrors 40 is left empty to act as a window. The light reaching the light detector 61 during the continuous rotation of the light chopper 50 is proportional periodically to the intensity of the narrow bandwidth light source 30 (henceforth: reference light) and to the relative humidity or vapour concentration in the gas space (henceforth: measuring light). In the intervening time between the detection of the reference and measuring light the covering area 54 of the chopper 50 blocks the path of the light during which interval the background light is detected by the light detector 60. The dark current of the light detector 60 slightly increases the output signals obtained from the detected light intensities. If the revolution of the light chopper 50 is chosen in a way that neither the intensity of the scattered background light nor the dark current of the light detector 60 can change significantly within one revolution, the relative humidity and/or vapour concentration in the gas space will be determined with a high accuracy by the evaluating unit 70.

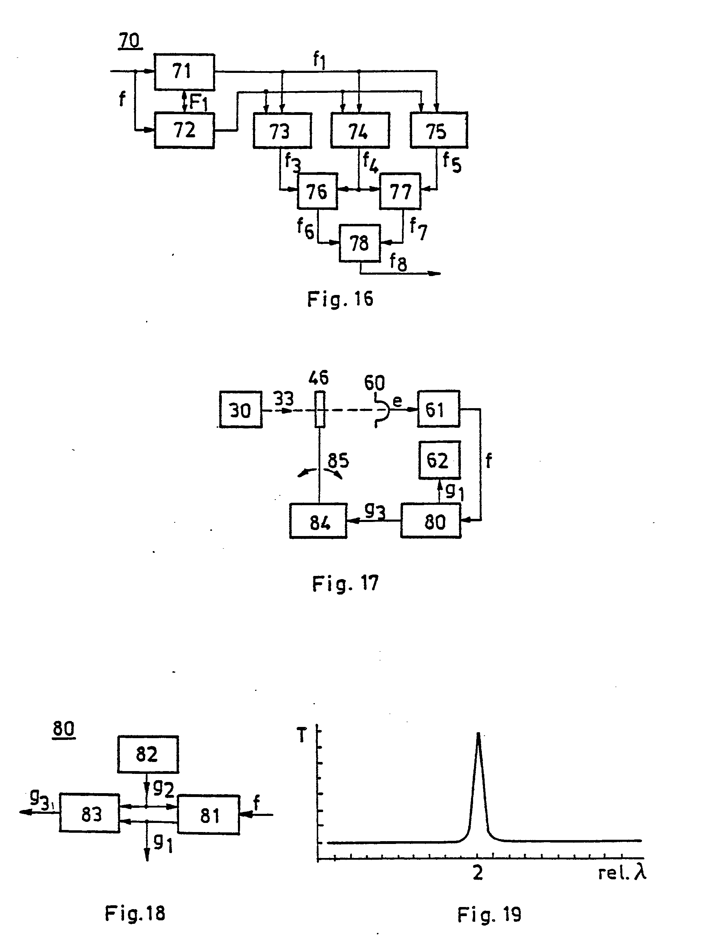

Fig. 16 illustrates a possible embodiment of the evaluating unit 70. The evaluating unit 70 has an analog-to-digital converter 71 and a control unit 72 connected to each other. The outputs f1 and f2 of the analog-to-digital converter 71 and of the control unit 72, respectively, are connected to a measuring light register 73, a background light register 74 and a reference light register 75. The outputs f3 and f4 of the measuring light register 73 and background light register 74, respectively, are connected to a first subtracting circuit 76; the outputs f4 and f5 of the background light register 74 and reference light register 75, respectively, are connected to a second subtracting circuit 77. The outputs f6 and f7 of the first subtracting circuit 76 and of the second subtracting circuit 77, respectively, are connected to a quotient forming unit 78. The input of the evaluating unit 70 is composed of the inputs of the analog-to-digital converter 71 and of the control unit 72; its output f8 is the output of the quotient forming unit 78.

During the continuous rotation of the light chopper 50, the light reaching the light detector 60 is proportional periodically to the intensity of the measuring light, to the background light and to the reference light. In the case of the measuring light reaching the light detector 60 the latter detects a light intensity proportional to the relative humidity or vapour concentration in the gas space. When the path of the light beam 33 is blocked by the disk of the light chopper 50 the light detector 60 detects the scattered background light only. The dark current of the light detector 60 slightly increases the output signals obtained from the detected light intensities. When the reference light reaches the light detector 60, the latter immediately detects the light intensity of the narrow bandwidth light source 30 through the empty opening—window—of the light chopper 50. At the transitions between the light being passed through or blocked by the light chopper 50 a jump in the light intensity is detected by the light detector 60. These jumps cause the control unit 72 to give a sampling signal to the analog-to-digital converter 71 which then digitalizes the amplified analog signal from the light detector 60. With the help of a write-in signal, the digitalized data are written into the corresponding register, namely into the measuring light register 73, the background light register 74 or the reference light register 75. After this, the first subtracting circuit 76 subtracts the data in the background register 74 from the data in the measuring light register 73, and the second subtracting circuit 77 subtracts the data in the background light register 74 from the data in the reference light register 75. The quotient forming unit 78 produces the quotient of the measuring signal and of the reference signal from the data appearing on the outputs $f_6$ and $f_7$ of the first and second subtracting circuits 76 and 77, respectively. The output signal of the quotient forming unit 78 is proportional to the relative humidity or vapour concentration in the gas space. This signal is applied to the input of the display unit 62 which indicates a signal proportional to the relative humidity or vapour concentration in the gas space.

Fig. 17 illustrates a further possible embodiment of the equipment according to the invention. In this embodiment the humidity- and/or vapour-sensitive interference filter 46 forms a structural part of an analog voltage-to-angle converter 84. The humidity- and/or vapour-sensitive interference filter 46 is rotatable around an axis perpendicular to the direction of the light beam 33

from a basic position by an angle proportional to the output voltage of a lock-in amplifier 81 (shown in Fig. 18).

Between the output f of the amplifier 61 and the input of the analog voltage-to-angle converter 84 there is an analog maximum-setting unit 80. A second output $g_1$ of the analog maximum-setting unit 80 is connected to the display unit 62.

Fig. 18 shows a possible embodiment of the analog maximum-setting unit 80, which has a lock-in amplifier 81 and an adding amplifier 83 connected in series with each other as well as a low frequency oscillator 82 connected to both a second input of the lock-in amplifier 81 and of the adding amplifier 83. The input of the analog maximum-setting unit 80 is composed of the output f of the amplifier 61 and the two outputs $g_1$ and $g_2$ of the analog maximum-setting unit 80 are the outputs of the adding amplifier 83 and of the lock-in amplifier 81, respectively.

As shown in Fig. 17, the light beam 33 of the narrow bandwidth light source 30 passes through the humidity- and/or vapour-sensitive interference filter 46 and reaches the light detector 60 which gives a signal to the amplifier 61 proportional to the intensity of the detected light. After amplification, this signal is applied to the input of the maximum-setting unit 80 shown in Fig. 18. The lock-in amplifier 81 rectifies this amplified signal and gives a signal to the input of the adding amplifier 83 proportional to the transmission and having the same sign. The output signal of the low-frequency oscillator 82 is applied to the input of the lock-in amplifier 81 and to the input of the adding amplifier 83, the output $g_3$ of the latter controlling the analog voltage-to-angle converter 84. Consequently, the analog voltage-to-angle converter 84 moves the humidity- and/or vapour-sensitive interference filter 46 back and forth by an angle of $\pm\Delta\phi$ around an axis perpendicular to the light beam 33 and periodically with the frequency of the low-frequency oscillator 82. This movement causes the transition function of the humidity- and/or vapour-sensitive interference filter 46 to be shifted periodically by the wavelength $\pm\Delta\lambda$. This wavelength-shift causes a modulation in the intensity of the light passing through the humidity- and/or vapour-sensitive interference filter 46. The phase, frequence and amplitude of the intensity modulation depends on the ratio between the wavelength of the light passing the humidity- and/or vapour-sensitive interference filter 46 and the wavelength belonging to the latter's maximal transmission. The lock-in amplifier 81 supplies the input of the adding amplifier 83 with a d.c. signal proportional to the wavelength shift from the transmission maximum and having a sign identical with that of this shift. The adding amplifier 83 applies a voltage to the input of the analog voltage-to-angle converter 84 which turns the humidity- and/or vapour-sensitive interference filter 46 to the position ensuring maximal transmission. Since the wavelength $\lambda_o$ belonging to the maximal transmission varies with the relative humidity or vapour concentration in the gas space, the angle of the necessary amount of rotation, and with this also the output signal of the lock-in amplifier 81, will be proportional to said concentration. Accordingly, the input of the display unit 62 is connected to the output $g_1$ of the lock-in amplifier 81.

Fig. 19 shows a transmission curve obtained by using the maximum-setting unit 80 equipped with an analog voltage-to-angle converter 84 as plotted against the wavelength in relative units. Since the humidity- and/or vapour-sensitive interference filter 46 has a sharp resonance, changes in the refraction index are amplified, thereby enabling even slight changes to be measured.

A change in the relative humidity or vapour concentration causes a shift of the wavelength belonging to the maximum of the transmission curve, and the angle of incidence of the light beam 33 will change as a consequence of turning the humidity- and/or vapour-sensitive interference filter 46. The analog voltage-to-angle converter 84 continuously follows the maximum of the transmission curve with the help of the maximum-setting unit 80.

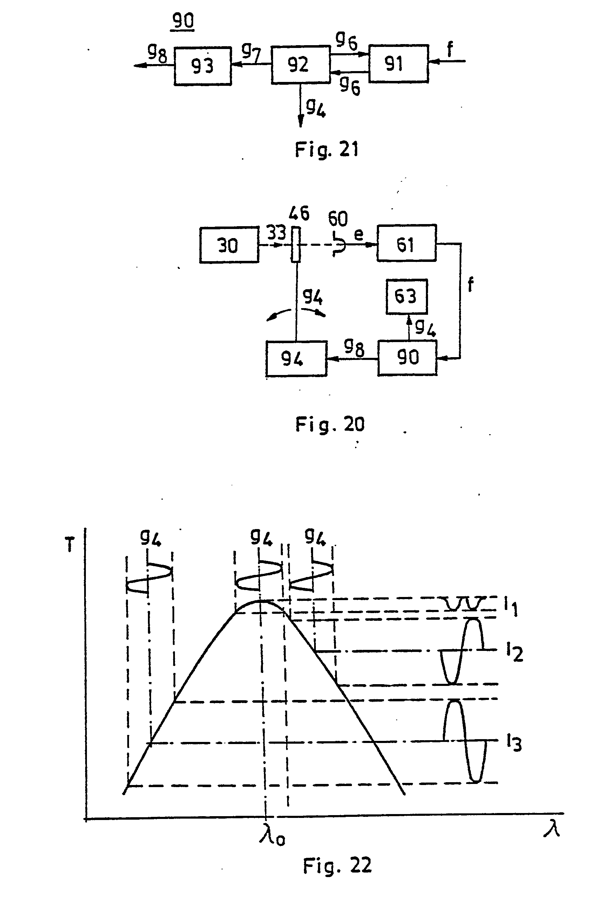

Fig. 22 illustrates the operation of the analog maximum-setting unit 80 having a low-frequency oscillator 82, whereby three different cases (A, B, and C) can be distinguished:

A) If the wavelength $\lambda$ of the narrow bandwidth light source is equal to $\lambda_o$ belonging to the maximum transmission of the humidity- and/or vapour-sensitive interference filter 46, the frequency of the light intensity modulation I1 will be twice higher than that of the low-frequency oscillator 82.

B) If the wavelength of the narrow bandwidth light source is shorter than $\lambda_o$ belonging to the maximum transmission of the humidity- and/or vapour-sensitive interference filter 46, the frequency of the light intensity modulation I3 will be equal to the frequency f1 of the low-frequency oscillator 82 and have the same phase as the output signal of the low-frequency oscillator 82 and an amplitude proportional to the difference of the two wavelengths in question.

C) If the wavelength of the narrow bandwidth light source is longer than $\lambda_o$ belonging to the maximum transmission of the humidity- and/or vapour-sensitive interference filter 46, the frequency of the light intensity modulation I2 will be equal to the frequency f1 of the low-frequency oscillator 82 and have the opposite phase as the output signal of the low-frequency oscillator 82 and an amplitude proportional to the difference of the two wavelengths in question.

Fig. 20 illustrates a further possible embodiment of the equipment according to the invention, where the humidity- and/or vapour-sensitive interference filter 46 forms a structural part of a digital pulse-to-angle converter 94. The humidity- and/or vapour-sensitive interference filter 46 is rotatable from a given basic position around an axis perpendicular to the light beam 33. Between the output f of the amplifier 61 and the input of the digital pulse-to-angle converter 94 there is a digital maximum-setting unit 90, a second output of which, $g_4$ is connected to a digital display unit 63. The digital pulse-to-angle converter 94 may be for instance a stepping motor.

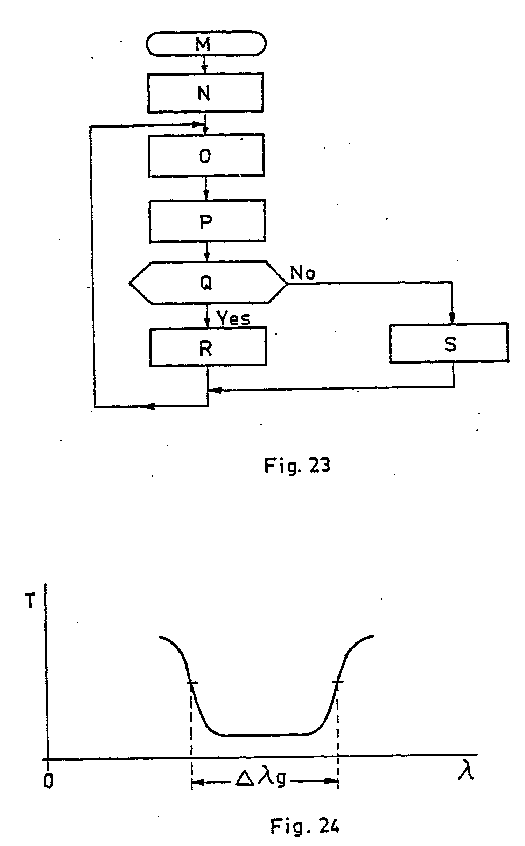

Fig. 21 shows a possible embodiment of the digital maximum-setting unit 90, which has an analog-to-digital converter 91 and a control unit 92 connected to each other, as well as a driving unit 93 connected to the output $g_7$ of the control unit 92. The input of the digital maximum-setting unit 90 is the output f of the amplifier 61, its first output $g_8$ is the output $g_8$ of the driving unit 93 and its second output $g_4$ is the second output of the control unit 92. The first output $g_6$ and the input of the control unit 92 are connected to the sampling input and to the data output $g_5$ of the analog-to-digital converter 91, respectively. The operation of the embodiments of the equipment according to the invention shown in Figs. 20 and 21 is illustrated by the flow chart presented in Fig. 23.

The control unit 92, for instance a microcontroller, gives a start signal from its first output to the starting input of the driving unit 93. Upon this, the digital pulse-to-angle converter 94 (e.g. a stepping motor) turns the humidity- and/or vapour-sensitive interference filter 46 in either of the two possible directions by an angle of $\Delta\phi$. The intensity of the light passing the humidity- and/or vapour-sensitive interference filter 46 is detected by the light detector 60, the detected signal is amlified by the amplifier 61, digitalized and stored. Then a sampling signal from the control unit 92 causes the analog-to-digital converter 91 to produce digital data proportional to the intensity of the light detected. Next, the same process described above is repeated but now the control unit 92 compares the light intensities detected in the two subsequent angular positions: If the detected light intensity is higher in the latter position, the next turn will be in the same direction as the previous one, if the first detected intensity was higher, the direction of the rotation will be changed, i.e. the next turn by the angle $\Delta\phi$ will be in the opposite direction. This algorithm ensures that the humidity- and/or vapour-sensitive interference filter 46 is turned by the digital maximum-setting unit 90 into the position with the maximum transmission. Therefore, the angular position of the humidity- and/or vapour-sensitive interference filter 46 continuously follows the variations in the wavelength of the maximum transmission caused by variations in the relative humidity or vapour concentration in the gas space and will, accordingly, be proportional to said relative concentration.

Figure 23 shows the flow chart of the algorithm how the digital maximum-setting unit 90 operates, with the following notations:

M: Power on;

N: Turning of the humidity- and/or vapour-sensitive interference filter by the angle $\Delta\phi$ in either direction, detection of intensity, sampling signal, digitalization, storing;

O: Determination of relative humidity or vapour concentration on the basis of angular position, displaying of angular position;

P. Turning of the humidity- and/or vapour-sensitive interference filter by the angle $\Delta\varphi$ into new position; detection of intensity, sampling signal, digitalization, storing;

Q: Is the newly detected light intensity higher than in the previous position?

R: Turning of the interference filter by the angle $\Delta\varphi$ in the same direction as before;

S. Turning of the interference filter by the angle $\Delta\varphi$ in the opposite direction as before.

Fig. 24 shows the transmission of a humidity- and/or vapour-sensitive interference mirror or interference filter as a function of wavelength. As it is seen in the figure, the curve has a range where the reflexion is maximum, i.e. the transmission has a minimum value. On both sides of this range the transmission rapidly increases, on the left side with decreasing and on the right side with increasing wavelength, thereby corresponding to the low- and high-pass filter, respectively.

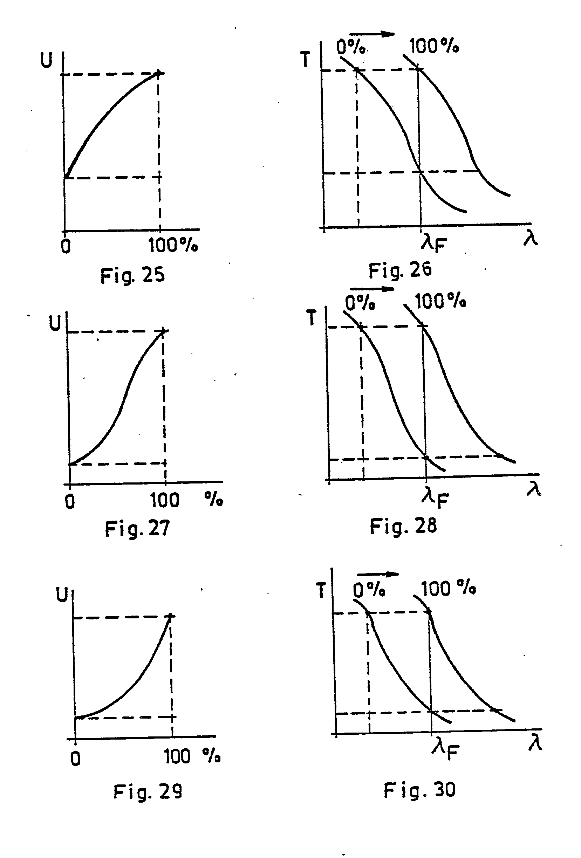

Fig. 25 to 30 illustrate that any variation between 0 and 100% of the relative humidity and/or vapour concentration causes the optical transition function of humidity- and/or vapour-sensitive interference mirrors or filters to be transposed parallely to its original position. Since the wavelength of the narrow bandwidth light source is constant, the light 'scans" the transmission curve of the humidity- and/or vapour-sensitive thin film system in the range of the transposition. Consequently, the equipment's output signal plotted as a function of relative humidity or vapour concentration will give a curve similar to that of the transition function of the humidity- and/or vapour-sensitive optical thin film system.

As it has been mentioned before, the humidity- and/or vapour-sensitivity of the equipment can be increased by using the arrangements shown in Figs. 7 and 8. A further increase in the sensitivity can be achieved by locating a second reflecting surface on the side of the humidity- and/or vapour-sensitive interference mirror opposite to the reflecting surface 46, thereby leading the light beam through the interference mirror several times. This solution greatly increases the slope of the transition function which means that the sensitivity is considerably increased.

The procedure and equipment according to the invention has the following advantages over the known solutions:

It is suitable for measuring relative humidity and/or vapour concentration in the whole range of 0% to 100% at a higher speed of measurement and in a wider temperature range. The measurement is performed by optical means, allowing remote location of light source, light detector and electronic units with only a single interference mirror of filter located in the gas space to be measured. The equipment's energy consumption is low and it is highly resistant to corrosion. A number of important parameters:

the accuracy, sensitivity, reproducibility and long-term stability can be increased by employing different solutions specified in the claims. Similarly, the equipment's sensitivity to scattered light as well as different nondesirable effects (e.g. those due to the light detector or light source) can be reduced. The equipment is applicable as detector in gas chromatography; in this case the speed of operation can further be increased and the measurement data are independent of the flow rate.

## Claims

1. An apparatus for the measurement of vapour concentration in gases which comprises a power supply unit (20) and a monochromatic light source (30) connected in series, a vapour concentration sensitive interference thin film system (40) located in the path of the light beam (33) of the monochromatic light source (30) of wavelength $\lambda$, a light detector (60) for the detection of the light beam (33) having penetrated the thin film system (40) as well as an amplifier (61) and a display unit (62) connected in series to the output (e) of the light detector (60), said thin film system (4) consisting of a transparent substrate (41) and of a layer (42—44) joined to said substrate (41), which layer has at least one dielectric layer with porous structure suitable for absorbing the vapour to be measured and comprises dielectric thin films being preferably of the optical thickness of $\lambda/4$ and having alternatively low and high refraction indices $n_1$ and $n_2$, respectively, said thin film system having a characteristic transmission-wavelength function with a slope shift proportional to the change of the vapour concentration at a wavelength range including the wavelength of said light source (30).

2. An apparatus according to claim 1, wherein the substance of the film or films with the low refraction index $n_1$ is silicon dioxide and that of the film or films with the high refraction index $n_2$ is titanium dioxide.

3. An apparatus according to claim 2, wherein it has a reflective surface (45) on the side of said thin film system (40) opposite the monochromatic light source (30)—either immediately on the surface of the transparent substrate (41) of the vapour concentration sensitive interference thin film system (40) or farther from it.

4. An apparatus according to claim 1, wherein the power supply unit (20) is a light intensity control unit (25), wherein between the monochromatic light source (30) and the vapour concentration sensitive interference thin film system (40) there is a semipermeable mirror (34) in the path of the light beam (33), wherein in the path of the measuring beam (35) passing through the semipermeable mirror (34) is the vapour concentration sensitive interference thin film system (40) and a first light detector (60), wherein in the path of the reference beam (36) reflected from the semipermeable mirror (34) is a second light detector (37), and wherein the output (j) of the second light detector (37) is connected to the input of the light intensity control unit (25).

5. An apparatus according to claim 1, wherein it has a light chopper (50) arranged perpendicular to and in the path of the light beam (33) between the monochromatic light source (30) and the light detector (60), wherein the light chopper (50) is fixed to the shaft (52) of a motor (51), wherein it has an evaluating unit (70) between the output (f) of the amplifier (61) and the input of the display unit (62), wherein said light chopper (50) is a plate, preferably a disk-shaped metal plate (55), and has an even number of—at least two—openings (53) of preferably circular shape, arranged along a circle, wherein in every second opening (53) there is a vapour concentration sensitive interference thin film system (40) and wherein every opening (53) between said interference thin film systems (40) is a vacant window.

6. An apparatus according to claim 1 or 2, wherein it has a power supply unit (2) and a monochromatic light source (30) connected in series, a vapour concentration sensitive interference thin film system (46) located in the path of the light beam (33) of the monochromatic light source (30), a light detector (60) for the detection of the light beam (33) having penetrated the interference thin film system (46) as well as an amplifier (61) and a display unit (62) connected in series to the output (e) of the light detector (60), wherein the vapour concentration sensitive interference thin film system (46) forms a structural part of an analog or digital voltage-to-angle converter (94, 94), and wherein between the output (f) of the amplifier (84, 94) there is an analog or digital maximum-setting unit (80, 90) a second output ($g_1$, $g_4$) of which is connected to the display unit (62).

7. An apparatus according to claim 6 wherein the vapour concentration sensitive interference thin film system (46) has a transparent substrate (41), a first interference mirror (42) joined to the transparent substrate (41) and composed of layers with an optical thickness of $\lambda/4$ and having alternately low and high refraction indices $n_1$ and $n_2$, respectively, an intermediate layer (43) joined to the first interference mirror (42) and having an optical thickness corresponding to a multiple of $\lambda/2$, as well as a second interference mirror (44) joined to the intermediate layer (43) and also composed of layers with an optical thickness of $\lambda/4$ and having alternately low and high refraction indices $n_1$ and $n_2$, respectively.

8. A method for the measurement of vapour concentration in gases, which comprises:

exposing a vapour sensitive interference thin film system to the vapour the concentration of which is to be measured, said thin film system having a characteristic transmission-wavelength function with a slope shift proportional to the change of the vapor concentration in a certain range of wavelength;

producing a monochromatic light the wavelength of which being within said range of wavelength;

directing a beam of said monochromatic light to said thin film system;

detecting the intensity of the light having penetrated said thin film system; and

displaying the vapour concentration.

9. A method as claimed in claim 8, which comprises:

while detecting the intensity of the light having penetrated the interference thin film system, compensating the shift of the said function by changing the angle of the transmission, said angle, after the compensation, being characteristic of the shift of the said function; and

displaying the vapour concentration by displaying said angle of the transmission.

**Patentansprüche**

1. Vorrichtung zur Messung der Dampfkonzentration bzw. absoluten bzw. relativen Feuchtigkeit in Gasen, welche eine Energieversorgungseinheit (20) und eine monochromatische Lichtquelle (30), die in Serie verbunden sind, ein dampf- bzw. feuchtigkeitskonzentrationsempfindliches Interferenzdünnfilmsystem (40), das im Weg des Lichtstrahles (33) der monochromatischen Lichtquelle (30) mit einer Wellenlänge λ angeordnet ist, einen Lichtdetektor (60) zur Erfassung des Lichtstrahles (33), der das Dünnfilmsystem (40) durchdrungen hat, und einen Verstärker (61), sowie eine Anzeigeeinheit (62) aufweist, die in Serie mit dem Ausgang (e) des Lichtdetektors (60) verbunden sind, wobei das Dünnfilmsystem (40) aus einem transparenten Substrat bzw. Trägermaterial (41) und einer Schicht (42 bis 44) besteht, die mit dem Substrat (41) verbunden ist, welche Schicht wenigstens eine dielektrische Schicht mit poröser Struktur aufweist, die zum Absorbieren des zu messenden Dampfes geeignet ist, und die vorzugsweise eine optische Dicke von λ/4 und abwechselnd niedrige und hohe Brechungsindizes $n_1$ bzw. $n_2$ hat, wobei das Dünnfilmsystem eine charakteristische Durchlassungs-Wellenlängenfunktion mit einer Neigungsverschiebung aufweist, die proportional zur Änderung der Dampfkonzentration in einem Wellenlängenbereich ist, der die Wellenlänge der Lichtquelle (30) umfaßt.

2. Vorrichtung nach Anspruch 1, bei dem die Substanz des Films oder der Filme mit dem niedrigen Brechungsindex $n_1$ Siliziumdioxid (Silizium-IV-oxid) ist, und daß die Substanz des Filmes oder der Filme mit hohem Brechungsindex $n_2$ Titandioxid ist.

3. Vorrichtung nach Anspruch 2, die eine reflektierende Fläche (45) auf der Seite des Dünnfilmsystems (40) gegenüber der monochromatischen Lichtquelle (30) aufweist—entweder direkt auf der Oberfläche des transparenten Substrates (41) des dampfkonzentrationsempfindlichen Interferenzdünnfilmsystems (40) oder weiter weg von diesem.

4. Vorrichtung nach Anspruch 1, bei dem die Energieversorgungseinheit (20) eine Lichtintensitätssteuereinheit (25) ist, wobei zwischen der monochromatischen Lichtquelle (30) und dem

dampfkonzentrationsempfindlichen Interferenzdünnfilmsystem (40) ein halbdurchlässiger Spiegel (34) im Weg des Lichtstrahles (33) angeordnet ist, wobei im Weg des Meßstrahls (35), der den halbdurchlässigen Spiegel (34) durchdringt, das dampfkonzentrationsempfindliche Interferenzdünnfilmsystem (40) und ein erster Lichtdetektor (60) angeordnet ist, wobei im Weg des Bezugsstrahles (36), der vom halbdurchlässigen Spiegel (34) reflektiert wird, ein zweiter Lichtdetektor (37) vorgesehen ist, und wobei der Ausgang (j) des zweiten Lichtdetektors (37) mit dem Eingang der Lichtintensitätssteuereinheit (25) verbunden ist.

5. Vorrichtung nach Anspruch 1, die einen Lichtunterbrecher (50) aufweist, der senkrecht zu und im Weg des Lichtstrahles (33) zwischen der monochromatischen Lichtquelle (30) und dem Lichtdetektor (60) angeordnet ist, wobei der Lichtunterbrecher (50) an der Welle (52) eines Moduls (51) befestigt ist, wobei eine Auswerteeinheit (70) zwischen dem Ausgang (f) des Verstärkers (61) und dem Eingang der Ausgabeeinheit (62) angeordnet ist, wobei der Lichtunterbrecher (50) eine Platte ist, vorzugsweise eine scheibenförmige Metallplatte (55), und wobei eine gerade Zahl—wenigstens zwei—von Öffnungen (53) von vorzugweise kreisförmiger Form entlang eines Kreises angeordnet ist, wobei in jeder zweiten Öffnung (53) ein dampfkonzentrationsempfindliches Interferenzdünnfilmsystem 40) angeordnet ist und wobei jede Öffnung (53) zwischen den Interferenzdünnfilmsystemen (40) ein leeres Fenster ist.

6. Vorrichtung nach Anspruch 1 oder 2, die eine Energieversorgungseinheit (2) und eine monochromatische Lichtquelle (30), die in Serie verbunden sind, ein dampfkonzentrationsempfindliches Interferenzdünnfilmsystem (46), das im Wege des Lichtstrahls (33) der monochromatischen Lichtquelle (30) angeordnet ist, einen Lichtdetektor (60) zum Erfassen des Lichtstrahles (33), der das Interferenzdünnfilmsystem (46) durchdrungen hat, einen Verstärker (61) und eine Ausgabeeinheit (62) aufweist, die in Serie mit dem Ausgang (e) des Lichtdetektors (60) verbunden sind, wobei das dampfkonzentrationsempfindliche Interferenzdünnfilmsystem (46) einen strukturellen Teil eines analogen oder digitalen Spannungs-Winkelkonverters (94, 94) bildet und wobei zwischen dem Ausgang (f) des Verstärkers (84, 94) eine analoge oder digitale Maximum-Setz-bzw. Einstelleinheit (80, 90) vorgesehen ist, deren zweiter Ausgang ($g_1$, $g_4$) mit der Anzeigeeinheit (62) verbunden ist.

7. Vorrichtung nach Anspruch 6, bei der das dampfkonzentrationsempfindliche Interferenzdünnfilmsystem (46) ein transparentes Substrat (41), einen ersten Interferenzspiegel (42), der mit dem transparenten Substrat (41) verbunden ist und aus Lagen mit optischer Dicke von $\lambda/4$ zusammengesetzt ist und abwechselnd niedrige und hohe Brechungsindizes $n_1$ bzw. $n_2$ aufweist, bei dem ferner eine Zwischenlage (43), die mit dem ersten Interferenzspiegel (42) verbunden ist und eine optische Dicke entsprechend einem Vielfa-

chen von $\lambda/2$ aufweist, sowie ein zweiter Interferenzspiegel (44) vorgesehen ist, der mit der Zwischenlage (43) verbunden ist und ebenfalls aus Lagen mit einer optischen Dicke von $\lambda/4$ zusammengesetzt ist, die abwechselnd hohe und niedrige Brechungsindizes $n_1$ bzw. $n_2$ haben.

8. Verfahren zur Messung der Dampfkonzentration in Gasen, welches umfaßt:

Aussetzen eines dampfempfindlichen interferenzdünnfilmsystems dem Dampf, dessen Konzentration gemessen werden soll, wobei das Dünnfilmsystems eine charakteristische Durchlassungs-Wellenlängenfunktion mit einer Neigungsverschiebung hat, die proportional der Änderung der Dampfkonzentration in einem bestimmten Bereich der Wellenlänge ist;

Erzeugen eines monochromatischen Lichts, dessen Wellenlänge innerhalb des Wellenlängenbereiches liegt;

Richten eines Strahles des monochromatischen Lichts auf das Dünnfilmsystem;

Erfassen der Intensität des Lichtes, das das Dünnfilmsystem durchdrungen hat; und

Anzeigen der Dampfkonzentration.

9. Verfahren nach Anspruch 8, bei dem während des Erfassens der Intensität des Lichtes, das das Interferenzdünnfilmsystems durchdrungen hat, die Verschiebung der Funktion durch Ändern des Winkels der Durchlassung kompensiert wird, wobei der Winkel nach der Kompensation charakteristisch für die Verschiebung der Funktion ist; und

Anzeigen der Dampfkonzentration durch Anzeigen des Winkels der Durchlassung.

**Revendications**

1. Un appareil pour mesurer la concentration de vapeur dans des gaz qui comprend une unité (20) d'alimentation et une source (30) de lumière monochromatique reliées en série, un système (40) à couches minces d'interférence sensible à la concentration de vapeur, situé dans la trajectoire du faisceau lumineux (33) de la source lumineuse monochromatique (30) de longueur d'onde ($\lambda$), un détecteur lumineux (60) pour la détection du faisceau lumineux (33) qui a pénétré le système (40) à couches minces ainsi qu'un amplificateur (61) et une unité (62) d'affichage reliés en série à la sortie (e) du détecteur (60) de lumière, ledit système (4) à couches minces étant constitué par un substrat transparent (42) et une couche (42, 44) adjacente audit substrat (41), couche qui possède au moins une couche diélectrique à structure poreuse apte à absorber la vapeur à mesurer et qui comprend des couches minces diélectriques qui sont, de préférence, d'épaisseur optique $\lambda/4$ et possédant, respectivement, des indices de réfraction ($n_1$ et $n_2$) faibles et forts ledit système à couches minces possédant une fonction caractéristique de longueur d'onde de transmission avec un décalage de pente proportionnel à la variation de la concentration de vapeur à une plage de longueurs d'onde comprenant la longueur d'onde de ladite source lumineuse (30).

2. Un appareil selon la revendication 1, dans lequel la substance de la couche ou des couches à faible indice de réfraction ($n_1$) est est du dioxyde de silicium et celle de la couche ou des couches à fort indice de réfraction ($n_2$) est du dioxyde de titane.

3. Un appareil selon la revendication 2, qui possède une surface réfléchissante (45) sur le côté dudit système (40) à couches minces opposé à la source lumineuse monochromatique (30), soit immédiatement sur la surface du substrat transparent (41) du système (40) à couches minces d'interférence sensible à la concentration de vapeur, soit plus éloignée de celui-ci.

4. Un appareil selon la revendication 1, dans lequel l'unité (20) d'alimentation est une unité (25) de commande d'intensité lumineuse dans laquelle entre la source lumineuse monochromatique (30) et le système (40) à couches minces d'interférence sensible à la concentration de vapeur, se trouve un miroir (34) semi perméable dans la trajectoire du faisceau lumineux (33), appareil dans lequel dans la trajectoire du faisceau (35) à mesurer qui traverse le miroir (34) semi perméable, se trouvent le système (40) à couches minces d'interférence sensible à la concentration de vapeur et un premier détecteur (60) de lumière, appareil dans lequel dans la trajectoire du faisceau (36) de référence réfléchi à partir du miroir semi perméable (34) se trouve un second détecteur (37) de lumière, et dans lequel finalement la sortie (j) du second détecteur (37) de lumière est reliée à l'entrée de l'unité (25) de commande d'intensité lumineuse.

5. Un appareil selon la revendication 1, dans lequel se trouve un obturateur (50) de lumière à éclipses disposé perpendiculairement au faisceau lumineux (33) et dans la trajectoire de celui-ci entre la source lumineuse monochromatique (30) et le détecteur (60) de lumière, appareil dans lequel l'obturateur (50) de lumière à éclipses est fixé à l'arbre (52) d'un moteur (51) dans lequel est comprise une unité (70) d'évaluation entre la sortie (f) de l'amplificateur (61) et l'entrée de l'unité (62) d'affichage, appareil dans lequel ledit obturateur (50) de lumière à éclipses est une plaque, de préférence une plaque métallique (55) en forme de disque, et possède un nombre pair d'ouvertures (53)—au moins deux—de préférence de forme circulaire, disposées le long d'un cercle, dans lequel dans chaque ouverture (53) paire se trouve un système (40) à couches minces d'interférence sensible à la concentration de vapeur et dans laquelle chacune des ouvertures (53) entre lesdits systèmes (40) à couches minces d'interférence est une fenêtre vide.

6. Un appareil selon la revendication 1 ou 2, dans lequel se trouvent une unité (20) d'alimentation et une source lumineuse monochromatique (30) reliées en série, un système (46) à couches minces d'interférence sensible à la concentration de vapeur situé dans la trajectoire du faisceau lumineux (33) de la source lumineuse monochromatique (30), un détecteur (60) de lumière pour la détection du faisceau lumineux (33) qui a pénétré le système (46) à couches minces d'interférence ainsi qu'un amplificateur (61) à une unité (62) d'affichage reliés en série à la sortie (e) du détecteur de lumière (60), appareil dans lequel le système (46) à couches minces d'interférence sensible à la concentration de vapeur forme une partie structurelle d'un convertisseur (94) de tension analogique ou digitale-à-angle, dans lequel entre la sortie (f) de l'amplificateur (84, 94) il existe une unité de positionnement maximal analogique ou digitale (80, 90) dont une seconde sortie ($g_1$, $g_4$) est reliée à l'unité (62) d'affichage.

7. Un appareil selon la revendication 6, dans lequel le système (46) à couches minces d'interférence sensible à la concentration de vapeur possède un substrat transparent (41), un premier miroir (42) d'interférence adjacent au substrat transparent (41) et composé de couches d'épaisseur optique ($\lambda/4$) et possédant des indices ($n_1$ et $n_2$) de réfraction alternativement forts et faibles, respectivement, une couche intermédiaire (43) adjacente au premier miroir (42) d'interférence et possédant une épaisseur optique correspondant à un multiple de ($\lambda/2$), ainsi qu'un second miroir (44) d'interférence adjacent à la couche intermédiaire (43) et composé également de couches d'une épaisseur optique de ($\lambda/4$) et possédant des indices de réfraction ($n_1$ et $n_2$) alternativement faibles et forts, respectivement.

8. Un procédé de mesure de concentration de vapeur dans les gaz qui comprend les étapes suivantes:
—exposer un système à couches minces d'interférence sensible à la vapeur dont la concentration doit être mesurée, ledit système à couches minces possédant une fonction caractéristique de longueur d'ondes de transmission comportant un décalage de pente proportionnel à la variation de la concentration de vapeur dans une certaine plage de longueur d'onde;
—produire une lumière monochromatique dont la longueur d'onde est située à l'intérieur de ladite plage de longueur d'onde;
diriger un faisceau de ladite lumière monochromatique vers ledit système à couches minces;
—detecter l'intensité de la lumière ayant pénétré ledit système à couches minces; et
—afficher la concentration de vapeur.

9. Un procédé selon la revendication 8 qui comprend, pendant la détection de l'intensité de la lumière qui a pénétré le système à couches minces d'interférence, compenser le décalage de ladite fonction en modifiant l'angle de la transmission, ledit angle, après la compensation, étant caractéristique du décalage de ladite fonction; et afficher la concentration de vapeur en affichant ledit angle de la transmission.

Fig. 1

Fig. 2

Fig. 3

Fig. 4

Fig. 5

Fig. 6

Fig. 7

Fig. 8

Fig. 9

Fig. 10

Fig. 11

Fig. 12

Fig. 13

Fig. 14

Fig. 15

Fig. 16

Fig. 17

Fig.18

Fig. 19

Fig. 21

Fig. 20

Fig. 22

Fig. 23

Fig. 24

Fig. 25

Fig. 26

Fig. 27

Fig. 28

Fig. 29

Fig. 30